# EUROPÄISCHE PATENTSCHRIFT

(11) **EP 3 592 604 B1**
(45) Veröffentlichungstag und Bekanntmachung des Hinweises auf die Patenterteilung: **26.03.2025**
(21) Anmeldenummer: 18708068.4
(22) Anmeldetag: 20.02.2018
(51) Int. Cl.: B60Q 1/50, G01C 21/36

(54) **KRAFTFAHRZEUG MIT EINEM BELEUCHTUNGSMODUL ZUR GENERIERUNG EINER SYMBOLIK**
MOTOR VEHICLE COMPRISING A LIGHTING MODULE FOR GENERATING A SET OF SYMBOLS
VÉHICULE AUTOMOBILE COMPRENANT UN MODULE D'ÉCLAIRAGE SERVANT À GÉNÉRER UN SYMBOLE

(30) Priorität: 09.03.2017 DE 102017203902
(43) Veröffentlichungstag der Anmeldung: 15.01.2020
(73) Patentinhaber: Bayerische Motoren Werke Aktiengesellschaft, 80809 München (DE)
(72) Erfinder: SOROKIN, Lenja, 80805 München (DE)
(86) Internationale Anmeldenummer: PCT/EP2018/054127
(87) Internationale Veröffentlichungsnummer: WO 2018/162219

(56) Entgegenhaltungen:
- WO-A1-2016/114048
- DE-A1- 102009 009 472
- JP-A- 2005 157 873
- JP-A- 2006 096 326
- JP-A- 2008 143 505
- JP-A- 2012 247 369

## Beschreibung

Die Erfindung betrifft ein Kraftfahrzeug mit einem Beleuchtungsmodul zur Generierung einer Symbolik.

Aus dem Stand der Technik sind Beleuchtungsmodule für Kraftfahrzeuge bekannt, mit denen Symbole auf dem Boden im Umfeld des Kraftfahrzeugs dargestellt werden. Beispielsweise offenbart die Druckschrift DE 10 2013 211 877 A1 ein Kraftfahrzeug mit einem Projektionsmodul aus einem Array aus Projektionsoptiken. Mit diesem Projektionsmodul wird eine Lichtverteilung in der Form eines Lichtteppichs im Umfeld des Kraftfahrzeugs und insbesondere neben den Einstiegstüren generiert. Dabei werden statische Bilder erzeugt, die keinen Bezug zu einer aktuellen Verkehrssituation haben.

In dem Dokument DE 10 2014 204 316 A1 ist ein Kraftfahrzeug mit einer optischen Signaleinrichtung beschrieben, welche optische Signale auf den Boden projiziert, die eine zum Parken des Kraftfahrzeugs beabsichtigte Parkfläche kennzeichnen. Die optischen Signale werden unabhängig von der augenblicklichen Position des Kraftfahrzeugs relativ zur beabsichtigten Parkfläche unbeweglich auf die Fahrbahnoberfläche projiziert.

In dem Dokument DE 10 2006 050 546 A1 ist ein Verfahren zur Informationsdarstellung beschrieben, bei dem mittels eines Projektionsmittels eines Kraftfahrzeugs ein Projektionsobjekt erzeugt wird, welches einen voraussichtlichen zukünftigen Aufenthaltsort des Kraftfahrzeugs flächig markiert.

In der Druckschrift EP 1 334 869 A2 ist ein Kraftfahrzeug mit einer Beleuchtungseinrichtung gezeigt, welche ein sichtbares Lichtmuster auf dem Boden im Umfeld des Kraftfahrzeugs erzeugt. Andere Kraftfahrzeuge sind aus den JP 2008 143505 A, JP 2005 157873 A oder JP 2006 096326 A bekannt.

Aufgabe der Erfindung ist es, ein Kraftfahrzeug mit einem Beleuchtungsmodul zur Generierung einer Symbolik auf dem Boden im Umfeld des Kraftfahrzeugs zu schaffen, um mittels der Symbolik andere Verkehrsteilnehmer frühzeitig und situationsgerecht auf das Kraftfahrzeug aufmerksam macht.

Diese Aufgabe wird durch das Kraftfahrzeug gemäß Patentanspruch 1 gelöst. Weiterbildungen der Erfindung sind in den abhängigen Ansprüchen definiert.

Das erfindungsgemäße Kraftfahrzeug, bei dem es sich um ein autonom bzw. teilautonom fahrendes Fahrzeug handeln kann, umfasst ein Beleuchtungsmodul zur Generierung einer Symbolik auf dem Boden im Umfeld des Kraftfahrzeugs. Vorzugsweise handelt es sich bei dem Beleuchtungsmodul um ein Projektionsmodul, welches die Symbolik auf den Boden projiziert. Darüber hinaus beinhaltet das erfindungsgemäße Kraftfahrzeug eine Steuereinrichtung zur Steuerung des Betriebs des Beleuchtungsmoduls, wobei die Steuereinrichtung ggf. auch Bestandteil des Beleuchtungsmoduls sein kann.

Die Steuereinrichtung ist derart ausgestaltet, dass sie die Relativposition der Symbolik zum Kraftfahrzeug automatisch derart anpasst, dass zumindest ein Teil der Symbolik an einem vorgegebenen Ort am Boden vor dem Kraftfahrzeug fixiert wird, wenn das Kraftfahrzeug bei einer Fahrt hin zu dem vorgegebenen Ort einen vorbestimmten Abstand zu dem vorgegeben Ort unterschreitet. Der Begriff "vor dem Kraftfahrzeug" bezieht sich dabei auf einen Bereich in Fahrtrichtung vor dem Kraftfahrzeug. Dabei kann der Ort ggf. auch versetzt zu dem Kraftfahrzeug liegen. Bei einer Vorwärtsfahrt des Kraftfahrzeugs befindet sich der Ort somit vor der Front des Kraftfahrzeugs, während der Ort bei einer Rückwärtsfahrt des Kraftfahrzeugs vor seinem Heck liegt.

Das erfindungsgemäße Kraftfahrzeug zeichnet sich dadurch aus, dass seine Steuereinrichtung dazu konfiguriert ist, den Betrieb des Beleuchtungsmoduls derart zu steuern, dass die Symbolik (automatisch) schon generiert wird, bevor das Kraftfahrzeug den vorbestimmten Abstand bei seiner Fahrt hin zu dem vorgegebenen Ort unterschreitet. Dabei wird die Symbolik für den Zeitraum, in dem das Kraftfahrzeug den vorbestimmten Abstand noch nicht unterschritten hat, zusammen mit dem Kraftfahrzeug aufgrund seiner Fahrt hin zu dem vorgegebenen Ort bewegt. Ferner reicht die Symbolik für diesen Zeitraum nicht bis zu dem vorgegebenen Ort.

Gegebenenfalls kann das erfindungsgemäße Kraftfahrzeug auch mehrere der oben beschriebenen Beleuchtungsmodule mit einer entsprechend zugeordneten Steuereinrichtung umfassen.

Die Symbolik kann erfindungsgemäß beliebig ausgestaltet sein und unterschiedliche Symbole und insbesondere auch Buchstaben und Zahlen enthalten. Insbesondere ist die Symbolik derart gewählt, dass hierdurch intuitiv ein Warn- bzw. Hinweissignal für andere Verkehrsteilnehmer vermittelt wird.

Die Erfindung weist den Vorteil auf, dass andere Verkehrsteilnehmer frühzeitig auf einen vorgegebenen Ort mittels des Beleuchtungsmoduls des Kraftfahrzeugs hingewiesen werden, obwohl die entsprechende Symbolik, welche diesen Hinweis erzeugt, noch nicht bis zu dem vorgegebenen Ort reicht. In einer besonders bevorzugten Ausführungsform ist der vorgegebene Ort ein künftiger Aufenthaltsort des Kraftfahrzeugs, so dass andere Verkehrsteilnehmer frühzeitig auf diesen Aufenthaltsort aufmerksam gemacht werden.

In einer weiteren, besonders bevorzugten Ausführungsform entspricht der vorbestimmte Abstand der (maximalen) Reichweite des Beleuchtungsmoduls in Fahrtrichtung des Kraftfahrzeugs. Somit kann ein Hinweis auf den vorgegebenen Ort bereits dann erfolgen, wenn sich die Reichweite des Beleuchtungsmoduls nicht bis zu dem vorgegebenen Ort erstreckt.

In einer weiteren bevorzugten Ausführungsform ist die Steuereinrichtung derart ausgestaltet, dass sie den vorgegebenen Ort automatisch aus Informationen über das Umfeld des Kraftfahrzeugs ermittelt. In einer bevorzugten Variante dieser Ausführungsform umfasst das Kraftfahrzeug eine Umfeldsensorik und/oder ein Navigationssystem, wobei die Informationen über das Umfeld des Kraftfahrzeugs zumindest teilweise aus der Umfeldsensorik und/oder dem Navigationssystem stammen. Die Umfeldsensorik ist vorzugsweise eine Kamera und/oder eine Lidareinrichtung und/oder eine Radareinrichtung. Über die Umfeldsensorik können beispielsweise Verkehrsschilder erkannt werden, welche als vorgegebenen Ort einen Halteort des Kraftfahrzeugs anzeigen. Mittels des Navigationssystems kann beispielsweise eine vor dem Kraftfahrzeug liegende Straßenverzweigung ermittelt werden, wobei der vorgegebene Ort an der Straßenverzweigung liegt.

In einer weiteren bevorzugten Variante umfasst das erfindungsgemäße Kraftfahrzeug eine Kommunikationsstelle, insbesondere eine drahtlose Kommunikationsstelle, um mit dieser Kommunikationsschnittstelle zumindest teilweise die Informationen über das Umfeld des Kraftfahrzeugs zu empfangen und die Steuereinrichtung bereitzustellen. Vorzugsweise ist die Kommunikationsschnittstelle dabei eine Car-to-Car- und/oder Car-to-X-Kommunikationsschnittstelle. Über solche Schnittstellen werden Informationen zwischen Kraftfahrzeugen bzw. Kraftfahrzeugen und Infrastruktureinrichtungen ausgetauscht.

In einer weiteren bevorzugten Ausführungsform des erfindungsgemäßen Kraftfahrzeugs ist die Steuereinrichtung dazu konfiguriert, den Betrieb des Beleuchtungsmoduls derart zu steuern, dass die Symbolik in ihrer Darstellung zumindest bis zu dem Zeitpunkt identisch bleibt, an dem das Kraftfahrzeug den vorbestimmten Abstand unterschreitet. Mit anderen Worten ändert die Symbolik bis zu diesem Zeitpunkt nicht ihre Eigenschaften, wie Farbe, Form, Helligkeit, darin enthaltene Symbole und dergleichen. Lediglich die Position der Symbolik verschiebt sich aufgrund der Fahrzeugbewegung.

In einer weiteren bevorzugten Ausführungsform ist die Steuereinrichtung dazu konfiguriert, den Betrieb des Beleuchtungsmoduls derart zu steuern, dass die Ausdehnung der Symbolik (automatisch) in Fahrtrichtung des Kraftfahrzeugs verringert wird, wenn das Kraftfahrzeug eine vorgegebene Distanz zu dem vorgegebenen Ort unterschreitet, wobei die vorgegebene Distanz kleiner oder genauso groß wie der vorbestimmte Abstand ist. Auf diese Weise wird der Tatsache Rechnung getragen, dass Teile der Symbolik bei sich verringerndem Abstand zum vorgegebenen Ort nicht mehr geeignet dargestellt werden können. Erfindungsgemäß ist der vorgegebene Ort ein Halteort, an dem das Kraftfahrzeug zum Stehen kommen wird. Dieser Halteort kann beispielsweise durch ein Verkehrszeichen gegeben sein, das ein Anhalten an einer Kreuzung anweist (z.B. Stoppschild). Bei der Festlegung des Halteorts kann ggf. auch der Bremsweg des Kraftfahrzeugs berücksichtigt werden.

In einer bevorzugten Variante der soeben beschriebenen Ausführungsform umfasst die Symbolik einen Haltebalken, welcher den Halteort des Kraftfahrzeugs anzeigt, wenn das Kraftfahrzeug den vorbestimmten Abstand unterschreitet, wobei der Haltebalken vorzugsweise ein gerader Balken ist, der senkrecht zu der Längsachse des Kraftfahrzeugs bezogen auf dessen Position am Halteort verläuft. Auf diese Weise wird anderen Verkehrsteilnehmern intuitiv der Ort des Anhaltens des Kraftfahrzeugs vermittelt.

In einer weiteren bevorzugten Ausführungsform umfasst die Symbolik neben dem Haltebalken eine Mehrzahl von weiteren Balken mit geringerem Abstand zum Kraftfahrzeug als der Haltebalken, wobei die weiteren Balken vorzugsweise parallel zum Haltebalken verlaufen.

In einer bevorzugten Variante der soeben beschriebenen Ausführungsform verschwinden die wieteren Balken nacheinander, wenn das Kraftfahrzeug die oben definierte vorgegebene Distanz zu dem vorgegebenen Ort unterschreitet. Vorzugsweise verkleinern die weiteren Balken kontinuierlich ihre Abstände zum Haltebalken und verschmelzen dabei miteinander und schließlich mit dem Haltebalken.

In einer weiteren Ausgestaltung eines nicht erfindungsgemäßen Kraftfahrzeugs ist der vorgegebene Ort einer Stelle an einer Straßenverzweigung. In diesem Fall umfasst die Symbolik vorzugsweise ein Navigationspfeil, der an der Stelle der Straßenverzweigung wiedergegeben wird und die Richtung der Weiterfahrt des Kraftfahrzeugs anzeigt. Die Richtung der Weiterfahrt kann z.B. aus der Navigationsroute ermittelt werden, entlang welcher das Kraftfahrzeug mittels seines Navigationssystems geführt wird.

In einer weiteren nicht erfindungsgemäßen Variante wird dann, wenn das Kraftfahrzeug die oben definierte vorgegebene Distanz zu dem vorgegebenen Ort unterschreitet, die Ausdehnung des Navigationspfeils in Fahrtrichtung des Kraftfahrzeugs dadurch verringert, dass der Navigationspfeil an seinem Ende benachbart zum Kraftfahrzeug verkürzt wird und/oder als Ganzes in Fahrtrichtung des Kraftfahrzeugs gestaucht wird.

Das Beleuchtungsmodul im erfindungsgemäßen Kraftfahrzeug kann unterschiedlich ausgestaltet sein. Wie bereits oben erwähnt, handelt es sich vorzugsweise um ein Projektionsmodul. Um eine große Reichweite des Beleuchtungsmoduls sicherzustellen, umfasst dieses vorzugsweise eine Laserlichtquelle, mit dessen Licht die Generierung der Symbolik auf dem Boden bewirkt wird. Ebenso ist es möglich, dass das Beleuchtungsmodul eine scannende Beleuchtungseinrichtung ist, welche die Symbolik mittels einer Scanbewegung eines Lichtspots auf dem Boden generiert. Mittels eines scannenden Beleuchtungsmoduls können auf einfache Weise die Position, Ausrichtung und Form der Symbolik verändert werden.

Ausführungsbeispiele der Erfindung werden nachfolgend anhand der beigefügten Figuren detailliert beschrieben.

Es zeigen:
- Fig. 1 bis Fig. 3: schematische Draufsichten auf ein Szenario, welches die Generierung einer Symbolik zur Anzeige eines Haltenorts gemäß einer Ausführungsform eines erfindungsgemäßen Kraftfahrzeugs wiedergibt; und
- Fig. 4 bis Fig. 6: schematische Draufsichten auf ein Szenario, welches die Generierung einer Symbolik in der Form eines Navigationshinweises gemäß einer Ausführungsform eines nicht erfindungsgemäßen Kraftfahrzeugs wiedergibt.

Nachfolgend wird eine Variante des erfindungsgemäßen Kraftfahrzeugs anhand eines autonom fahrenden Fahrzeugs beschrieben, welches in den Figuren mit dem Bezugszeichen 1 bezeichnet ist.

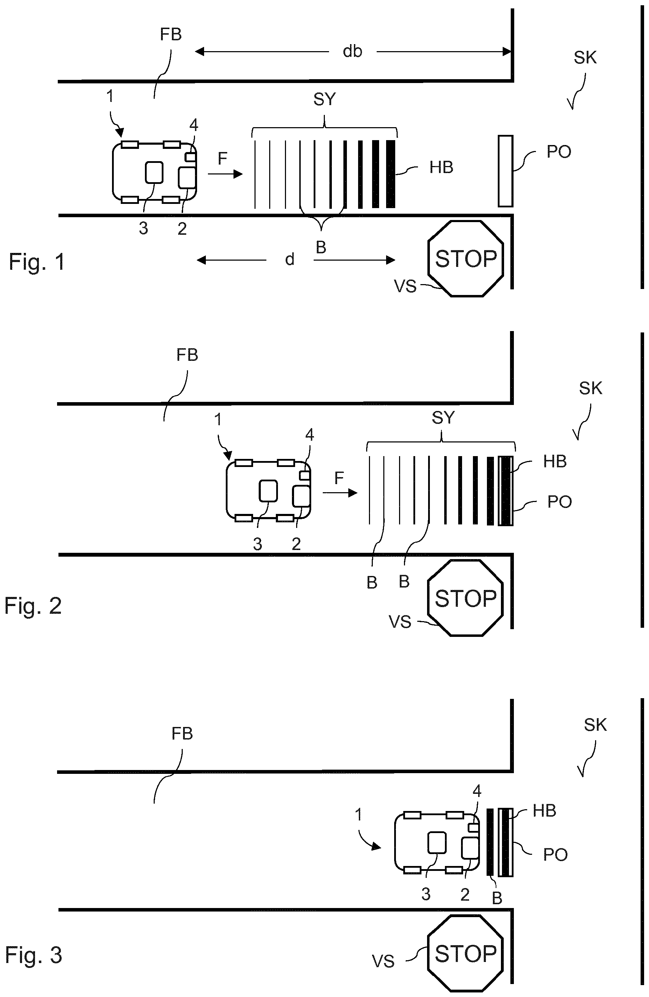

In dem Szenario gemäß Fig. 1 bis Fig. 3 bewegt sich das Kraftfahrzeug 1 auf einer Fahrbahn FB, die in den Draufsichten der Figuren in horizontaler Richtung verläuft. Die Fahrtrichtung des Kraftfahrzeugs ist durch den Pfeil F angedeutet und das Kraftfahrzeug nähert sich einer Straßenkreuzung SK, bei der es auf eine quer zur Fahrbahn FB verlaufende Straße trifft. Das Kraftfahrzeug 1 umfasst ein Beleuchtungsmodul 2, welches in der hier beschriebenen Variante eine Symbolik SY aus einer Vielzahl von quer zur Fahrbahn FB verlaufenden Balken auf den Boden vor dem Kraftfahrzeug 1 projiziert. Das Kraftfahrzeug 1 beinhaltet ferner eine Umfeldsensorik 4, wie z.B. eine Kamera, welche das Umfeld vor dem Kraftfahrzeug erfasst. Darüber hinaus ist in dem Kraftfahrzeug 1 eine Steuereinrichtung 3 verbaut, welche unter anderem das Beleuchtungsmodul 2 geeignet ansteuert, indem sie entsprechende Befehle an das Beleuchtungsmodul zur Anpassung der Symbolik SY gibt.

In dem Szenario der Fig. 1 wird aus den Sensordaten der Umfeldsensorik 4 mittels einer Objekterkennungs-Software, die beispielsweise in der Steuereinrichtung 3 integriert sein kann, das Verkehrszeichen VS in der Form eines Stoppschilds erkannt. Hieraus leitet die Steuereinrichtung 3 die Information ab, dass das Kraftfahrzeug 1 an dem Halteort PO, die als imaginärer Balken am Boden angedeutet ist, anhalten muss. Der hierfür nötige Bremsweg ist in Fig. 1 mit db bezeichnet. Darüber hinaus ist die Projektionsreichweite des Beleuchtungsmoduls 2 durch den Abstand d angedeutet.

Obwohl zum Zeitpunkt der Fig. 1 die Projektionsreichweite d deutlich geringer als der Bremsweg db zum Halteort PO ist, projiziert das Kraftfahrzeug 1 bereits zu diesem Zeitpunkt mittels des Beleuchtungsmoduls 2 eine Symbolik SY auf den Boden, um hierdurch anderen Verkehrsteilnehmern zu vermitteln, dass das Kraftfahrzeug demnächst aufgrund des Stoppschilds anhalten wird. Hierfür beinhaltet die Symbolik SY eine Vielzahl von Balken, wobei der Haktebalken HB der am weitesten entfernt vom Kraftfahrzeug liegende Balken ist, der bei weiterer Annäherung des Kraftfahrzeugs den Halteort PO anzeigen wird. Neben dem Haltebalken HB umfasst die Symbolik SY weitere Balken B, welche aus Übersichtlichkeitsgründen nur teilweise mit diesem Bezugszeichen bezeichnet sind. Die weiteren Balken verlaufen parallel zum Haltebalken HB und liegen näher zur Front des Kraftfahrzeugs 1. Die Breite dieser Balken nimmt mit abnehmender Distanz von der Front des Kraftfahrzeugs kontinuierlich ab.

Ein wesentliches Merkmal der hier beschriebenen Ausführungsform des erfindungsgemäßen Kraftfahrzeugs besteht darin, dass die Symbolik SY bereits zu einem Zeitpunkt auf den Boden projiziert wird, zu dem der Abstand zwischen der Front des Kraftfahrzeugs und dem Halteort PO größer als die Projektionsreichweite d der Symbolik ist. Hierdurch erfolgt eine frühzeitige Anzeige der Fahrzeugintention, die im Falle der Fig. 1 bis Fig. 3 im Bremsen und damit verbundenen Anhalten des Kraftfahrzeugs am Halteort PO liegt.

Solange der Abstand zwischen der Front des Kraftfahrzeugs 1 und dem Halteort PO größer als die Projektionsreichweite d ist, wird die Symbolik SY als Ganzes bei der Fortbewegung des Kraftfahrzeugs vor diesem hergeschoben, bis schließlich der Abstand zwischen der Front des Kraftfahrzeugs und dem Halteort PO der Projektionsreichweite d entspricht. Dieser Zeitpunkt ist in Fig. 2 wiedergegeben. Wie man dort erkennt, liegt nunmehr der Haltebalken HB an dem tatsächlichen künftigen Halteort PO des Kraftfahrzeugs.

Bei der Weiterbewegung des Kraftfahrzeugs in Richtung zu dem Halteort PO wird nunmehr die Symbolik SY dahingehend angepasst, dass der Haltebalken HB an dem Halteort PO fixiert wird, jedoch die restlichen Balken B nacheinander von links nach rechts im Rahmen der Weiterbewegung des Kraftfahrzeugs verschwinden. Dies ist nochmals in Fig. 3 verdeutlicht, in der das Kraftfahrzeug 1 bereits einen sehr geringen Abstand zum Halteort PO aufweist. Wie man erkennt, enthält die Symbolik SY aufgrund der sehr nahen Position des Kraftfahrzeugs 1 zum Halteort PO nur noch den Haltebalken HB sowie einen einzelnen weiteren Balken B, der bei Weiterbewegung des Kraftfahrzeugs schließlich auch verschwindet, so dass bei Stopp des Kraftfahrzeugs nur noch der Haltebalken HB übrig bleibt.

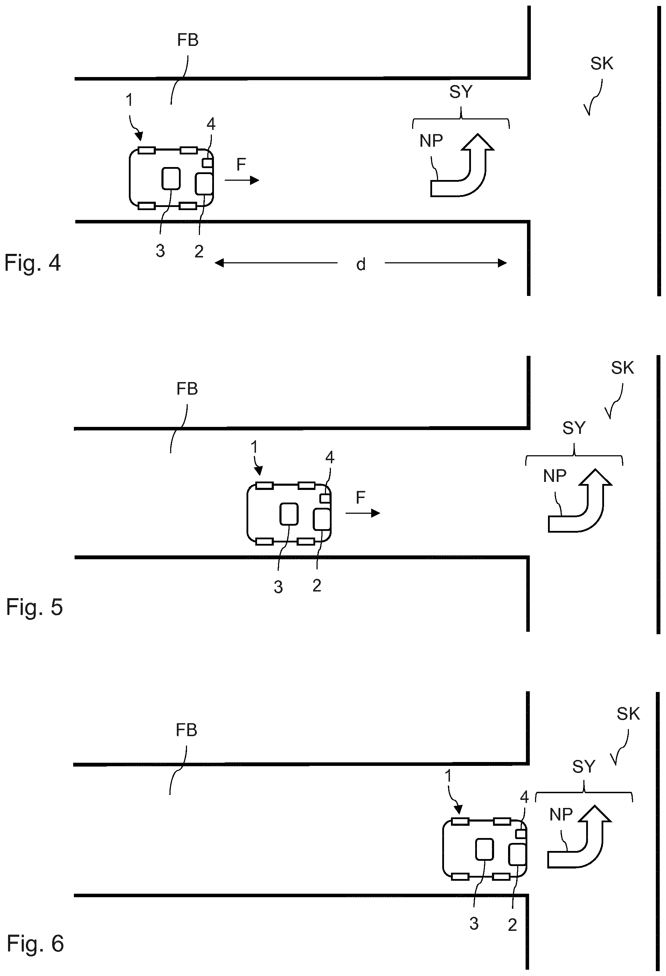

Fig. 4 bis Fig. 6 zeigen ein zweites Szenario, welches nicht Teil der Erfindung ist, bei dem das Kraftfahrzeug 1 anstatt einer Symbolik zur Anzeige eines Halteorts eine Symbolik in der Form eines Navigationspfeils NP auf den Boden vor sich projiziert. Genauso wie in Fig. 1 bis Fig. 3 nähert sich das Kraftfahrzeug 1 einer Straßenkreuzung SK. Analog zu Fig. 1 bis Fig. 3 enthält das Kraftfahrzeug 1 das Beleuchtungsmodul 2, die Umfeldsensorik 4 sowie eine Steuereinrichtung 3 zur Steuerung des Beleuchtungsmoduls 2. Ferner beinhaltet das Kraftfahrzeug in Fig. 4 bis Fig. 6 ein nicht gezeigtes Navigationssystem, aus dem die Information stammt, dass das Kraftfahrzeug gemäß der aktuellen Navigationsroute an der Straßenkreuzung SK nach links abbiegen wird. Darüber hinaus ist zu beachten, dass die Projektionsreichweite d des Beleuchtungsmoduls 2 in Fig. 4 bis Fig. 6 höher ist als die entsprechende Projektionsreichweite des Beleuchtungsmoduls in Fig. 1 bis Fig. 3.

Gemäß Fig. 4 wird frühzeitig eine Symbolik SY in der Form des nach links gerichteten Abbiegepfeils NP auf die Fahrbahn vor dem Kraftfahrzeug projiziert. Die Projektion erfolgt dabei zu einem Zeitpunkt, zu dem der Abstand zwischen der Front des Kraftfahrzeugs und dem Mittelpunkt der Straßenkreuzung SK noch größer als die Projektionsreichweite d des Beleuchtungsmoduls 2 ist. Kommt nunmehr das Kraftfahrzeug 1 der Straßenkreuzung SK immer näher, wird der Navigationspfeil NP ohne Veränderung seines Abstands zur Front des Kraftfahrzeugs weiter nach rechts verschoben, bis schließlich der in Fig. 5 gezeigte Zeitpunkt erreicht ist, zu dem die Projektionsreichweite d dem Abstand zwischen der Front des Kraftfahrzeugs 1 und der Mitte der Straßenkreuzung SK entspricht.

Bei Weiterbewegung des Kraftfahrzeugs wird die Projektion des Beleuchtungsmoduls 2 nunmehr derart angepasst, dass der Navigationspfeil NP in der Mitte der Straßenkreuzung SK fixiert wird, während sich das Kraftfahrzeug 1 weiter der Straßenkreuzung SK nähert. Dies ist in Fig. 6 verdeutlicht, in welcher der Abstand des Kraftfahrzeugs zur Straßenkreuzung gegenüber Fig. 5 stark abgenommen hat. Wie man erkennt, bleibt der Navigationspfeil NP an der Mitte der Straßenkreuzung stehen. Bei anschließender Einfahrt des Kraftfahrzeugs in die Straßenkreuzung kommt es schließlich zu einer Anpassung des Navigationspfeils. Die Anpassung kann dabei darin bestehen, dass das linke Ende des Navigationspfeils, welches benachbart zur Front des Kraftfahrzeugs 1 liegt, sukzessive verkürzt wird, was den Eindruck eines "Auffressens" des Navigationspfeils durch das Kraftfahrzeug vermittelt. Alternativ oder zusätzlich kann der Navigationspfeil auch sukzessive durch eine optische Stauchung in Richtung der Erstreckung der Fahrbahn FB verkürzt werden.

Die im Vorangegangenen beschriebenen Ausführungsformen der Erfindung weisen eine Reihe von Vorteilen auf. Insbesondere wird zwischen einer sich mit dem Kraftfahrzeug mitbewegenden Anzeige einer Symbolik und einer Anzeige der Symbolik an einem fixen Ort gewechselt. Auf diese Weise kann auch über die Reichweite des Beleuchtungsmoduls hinaus bereits frühzeitig eine Intention des Kraftfahrzeugs anderen Verkehrsteilnehmern vermittelt werden und hierdurch eine erhöhte Verkehrssicherheit erreicht werden.

### Bezugszeichenliste

- 1: Kraftfahrzeug
- 2: Beleuchtungsmodul
- 3: Steuereinrichtung
- 4: Umfeldsensorik
- SY: Symbolik
- HB: Haltebalken
- B: Balken
- PO: Halteort
- SK: Straßenkreuzung
- db: Bremsweg
- d: Projektionsreichweite
- FB: Fahrbahn
- VS: Verkehrsschild
- NP: Navigationspfeil

## Patentansprüche

1. Kraftfahrzeug mit einem Beleuchtungsmodul (2) zur Generierung einer Symbolik (SY) auf dem Boden im Umfeld des Kraftfahrzeugs (1) und mit einer Steuereinrichtung (3) zur Steuerung des Betriebs des Beleuchtungsmoduls (2), wobei die Steuereinrichtung (3) derart ausgestaltet ist, dass sie die Relativposition der Symbolik (SY) zum Kraftfahrzeug (1) automatisch derart anpasst, dass zumindest ein Teil der Symbolik (SY) an einem vorgegebenen Ort am Boden vor dem Kraftfahrzeug (1) fixiert wird, wenn das Kraftfahrzeug (1) bei einer Fahrt hin zu dem vorgegebenen Ort (PO) einen vorbestimmten Abstand (d) zu dem vorgegebenen Ort (PO) unterschreitet,
wobei die Steuereinrichtung (3) dazu konfiguriert ist, den Betrieb des Beleuchtungsmoduls (2) derart zu steuern, dass die Symbolik (SY) schon generiert wird, bevor das Kraftfahrzeug (1) den vorbestimmten Abstand (d) bei seiner Fahrt hin zu dem vorgegebenen Ort (PO) unterschreitet, wobei für den Zeitraum, in dem das Kraftfahrzeug (1) den vorbestimmten Abstand (d) noch nicht unterschritten hat, die Symbolik (SY) zusammen mit dem Kraftfahrzeug (2) aufgrund seiner Fahrt hin zu dem vorgegebenen Ort (PO) bewegt wird und dabei nicht bis zum vorgegebenen Ort (PO) reicht, **dadurch gekennzeichnet, dass**
der vorgegebene Ort (PO) ein Halteort ist, an dem das Kraftfahrzeug (1) zum Stehen kommen wird.

2. Kraftfahrzeug nach Anspruch 1, **dadurch gekennzeichnet, dass** der vorbestimmte Abstand (d) der Reichweite des Beleuchtungsmoduls (2) in Fahrtrichtung des Kraftfahrzeugs (1) entspricht.

3. Kraftfahrzeug nach Anspruch 1 oder 2, **dadurch gekennzeichnet, dass** die Steuereinrichtung (3) derart ausgestaltet ist, dass sie den vorgegebenen Ort (PO) automatisch aus Informationen über das Umfeld des Kraftfahrzeugs (1) ermittelt.

4. Kraftfahrzeug nach Anspruch 3, **dadurch gekennzeichnet, dass** das Kraftfahrzeug (1) eine Umfeldsensorik (4) und/oder ein Navigationssystem umfasst, wobei die Informationen über das Umfeld des Kraftfahrzeugs (1) zumindest teilweise aus der Umfeldsensorik (4) und/oder dem Navigationssystem stammen.

5. Kraftfahrzeug nach Anspruch 3 oder 4, **dadurch gekennzeichnet, dass** das Kraftfahrzeug (1) eine Kommunikationsschnittstelle, insbesondere eine drahtlose Kommunikationsschnittstelle, umfasst, um mit dieser Kommunikationsschnittstelle zumindest teilweise die Informationen über das Umfeld des Kraftfahrzeugs (1) zu empfangen und der Steuereinrichtung (3) bereitzustellen, wobei die Kommunikationsschnittstelle insbesondere eine Car-to-Car- und/oder Car-to-X-Kommunikationsschnittstelle ist.

6. Kraftfahrzeug nach einem der vorhergehenden Ansprüche, **dadurch gekennzeichnet, dass** die Steuereinrichtung (3) konfiguriert ist, den Betrieb des Beleuchtungsmoduls (2) derart zu steuern, dass die Symbolik (SY) in ihrer Darstellung zumindest bis zu dem Zeitpunkt identisch bleibt, an dem das Kraftfahrzeug (1) den vorbestimmten Abstand (d) unterschreitet.

7. Kraftfahrzeug nach einem der vorhergehenden Ansprüche, **dadurch gekennzeichnet, dass** die Steuereinrichtung (3) konfiguriert ist, den Betrieb des Beleuchtungsmoduls (2) derart zu steuern, dass die Ausdehnung der Symbolik (SY) in Fahrtrichtung des Kraftfahrzeugs (1) verringert wird, wenn das Kraftfahrzeug (1) eine vorgegebene Distanz zu dem vorgegebenen Ort (PO) unterschreitet, wobei die vorgegebene Distanz kleiner oder genauso groß wie der vorbestimmte Abstand (d) ist.

8. Kraftfahrzeug nach einem der vorhergehenden Ansprüche, **dadurch gekennzeichnet, dass** die Symbolik (SY) einen Haltebalken (HB) umfasst, welcher den Halteort (PO) des Kraftfahrzeugs (1) anzeigt, wenn das Kraftfahrzeug (1) den vorbestimmten Abstand (d) unterschreitet, wobei der Haltebalken (HB) vorzugsweise ein gerader Balken ist, der senkrecht zu der Längsachse des Kraftfahrzeugs (1) bezogen auf dessen Position am Halteort (PO) verläuft.

9. Kraftfahrzeug nach Anspruch 8, **dadurch gekennzeichnet, dass** die Symbolik (SY) neben dem Haltebalken (HB) eine Mehrzahl von weiteren Balken (B) mit geringerem Abstand zum Kraftfahrzeug (1) als der Haltebalken (HB) umfasst, wobei die weiteren Balken (B) vorzugsweise parallel zum Haltebalken (HB) verlaufen.

10. Kraftfahrzeug nach Anspruch 9 in Kombination mit Anspruch 7, **dadurch gekennzeichnet, dass** die weiteren Balken (B) nacheinander verschwinden, wenn das Kraftfahrzeug (1) die vorgegebene Distanz zu dem vorgegebenen Ort (PO) unterschreitet, wobei die weiteren Balken vorzugsweise kontinuierlich ihre Abstände zum Haltebalken (HB) verkleinern und dabei miteinander und schließlich mit dem Haltebalken (HB) verschmelzen.

11. Kraftfahrzeug nach einem der vorhergehenden Ansprüche, **dadurch gekennzeichnet, dass** das Beleuchtungsmodul (2) eine Laserlichtquelle umfasst, mit dessen Licht die Generierung der Symbolik (SY) auf dem Boden bewirkt wird, und/der das Beleuchtungsmodul (2) ein scannendes Beleuchtungsmodul (2) ist, welches die Symbolik (SY) mittels einer Scanbewegung eines Lichtspots auf dem Boden generiert.

## Claims

1. Motor vehicle having an illumination module (2) for generating symbolic imagery (SY) on the ground in the vicinity of the motor vehicle (1) and having a control device (3) for controlling the operation of the illumination module (2), wherein the control device (3) is configured in such a way that it automatically adapts the relative position of the symbolic imagery (SY) with respect to the motor vehicle (1) in a manner such that at least some of the symbolic imagery (SY) is fixed at a specified location on the ground in front of the motor vehicle (1) when the distance of the motor vehicle (1) from the specified location (PO) falls below a specified distance (d) during a journey toward the specified location (PO),
wherein the control device (3) is configured to control the operation of the illumination module (2) in such a way that the symbolic imagery (SY) is already generated before the distance of the motor vehicle (1) falls below the specified distance (d) during its journey toward the specified location (PO), wherein, for the period of time in which the distance of the motor vehicle (1) has not yet fallen below the specified distance (d), the symbolic imagery (SY) is moved together with the motor vehicle (2) on account of its journey toward the specified location (PO) and in the process does not reach as far as the specified location (PO), **characterized in that**
the specified location (PO) is a stopping location at which the motor vehicle (1) will come to a standstill.

2. Motor vehicle according to Claim 1, **characterized in that** the specified distance (d) corresponds to the range of the illumination module (2) in the direction of travel of the motor vehicle (1).

3. Motor vehicle according to Claim 1 or 2, **characterized in that** the control device (3) is configured in such a way that it automatically determines the specified location (PO) from information about the vicinity of the motor vehicle (1).

4. Motor vehicle according to Claim 3, **characterized in that** the motor vehicle (1) comprises a vicinity sensor system (4) and/or a navigation system, wherein the information about the vicinity of the motor vehicle (1) originates at least partially from the vicinity sensor system (4) and/or the navigation system.

5. Motor vehicle according to Claim 3 or 4, **characterized in that** the motor vehicle (1) comprises a communication interface, in particular a wireless communication interface, in order to at least partially receive the information about the vicinity of the motor vehicle (1) with this communication interface and to provide it to the control device (3), wherein the communication interface is in particular a car-to-car and/or car-to-X communication interface.

6. Motor vehicle according to any one of the preceding claims, **characterized in that** the control device (3) is configured to control the operation of the illumination module (2) in such a way that the symbolic imagery (SY) remains the same in terms of its representation at least until the time at which the distance of the motor vehicle (1) falls below the specified distance (d).

7. Motor vehicle according to any one of the preceding claims, **characterized in that** the control device (3) is configured to control the operation of the illumination module (2) in such a way that the extent of the symbolic imagery (SY) in the direction of travel of the motor vehicle (1) is reduced when the separation length between the motor vehicle (1) and the specified location (PO) falls below a specified separation length, wherein the specified separation length is less than or equal to the specified distance (d).

8. Motor vehicle according to any one of the preceding claims, **characterized in that** the symbolic imagery (SY) comprises a stopping bar (HB), which indicates the stopping location (PO) of the motor vehicle (1) when the distance of the motor vehicle (1) falls below the specified distance (d), wherein the stopping bar (HB) is preferably a straight bar which runs perpendicular to the longitudinal axis of the motor vehicle (1) in relation to the position thereof at the stopping location (PO).

9. Motor vehicle according to Claim 8, **characterized in that** the symbolic imagery (SY) comprises, in addition to the stopping bar (HB), a plurality of further bars (B) having smaller distances from the motor vehicle (1) than the stopping bar (HB), wherein the further bars (B) preferably run parallel to the stopping bar (HB).

10. Motor vehicle according to Claim 9 in combination with Claim 7, **characterized in that** the further bars (B) disappear one after the other when the distance of the motor vehicle (1) from the specified location (PO) falls below the specified distance, wherein the distances of the further bars from the stopping bar (HB) preferably decrease continuously and in the process merge first with one another and finally with the stopping bar (HB).

11. Motor vehicle according to any one of the preceding claims, **characterized in that** the illumination module (2) comprises a laser light source, with the light of which the generation of the symbolic imagery (SY) on the ground is effected, and/or the illumination module (2) is a scanning illumination module (2), which generates the symbolic imagery (SY) by means of a scanning movement of a light spot on the ground.

## Revendications

1. Véhicule automobile comprenant un module d'éclairage (2) destiné à générer un ensemble de symboles (SY) sur le sol dans l'environnement du véhicule automobile (1) et comprenant un dispositif de commande (3) destiné à commander le fonctionnement du module d'éclairage (2), le dispositif de commande (3) étant conçu de telle sorte qu'il adapte automatiquement la position relative de l'ensemble de symboles (SY) par rapport au véhicule automobile (1), de telle sorte qu'au moins une partie de l'ensemble de symboles (SY) est fixée à un emplacement prédéfini au sol devant le véhicule automobile (1) lorsque le véhicule automobile (1), en cas de déplacement vers l'emplacement (PO) prédéfini, passe en dessous d'une distance (d) prédéterminée par rapport à l'emplacement (PO) prédéfini,
le dispositif de commande (3) étant configuré pour commander le fonctionnement du module d'éclairage (2) de telle sorte que l'ensemble de symboles (SY) est déjà généré avant que le véhicule automobile (1) ne passe en dessous de la distance (d) prédéterminée lors de son déplacement vers l'emplacement (PO) prédéfini, l'ensemble de symboles (SY) étant déplacé conjointement avec le véhicule automobile (2) en raison de son déplacement vers l'emplacement (PO) prédéfini et n'atteignant ainsi pas l'emplacement (PO) prédéfini pendant la période au cours de laquelle le véhicule automobile (1) n'est pas encore passé en dessous de la distance (d) prédéterminée, **caractérisé en ce que**
l'emplacement (PO) prédéfini est un emplacement d'arrêt auquel le véhicule automobile (1) va s'arrêter.

2. Véhicule automobile selon la revendication 1, **caractérisé en ce que** la distance (d) prédéterminée correspond à la portée du module d'éclairage (2) dans le sens de marche du véhicule automobile (1).

3. Véhicule automobile selon la revendication 1 ou 2, **caractérisé en ce que** le dispositif de commande (3) est conçu de telle sorte qu'il détermine l'emplacement (PO) prédéfini automatiquement à partir d'informations relatives à l'environnement du véhicule automobile (1).

4. Véhicule automobile selon la revendication 3, **caractérisé en ce que** le véhicule automobile (1) comprend un système de détection d'environnement (4) et/ou un système de navigation, les informations relatives à l'environnement du véhicule automobile (1) provenant au moins partiellement du système de détection d'environnement (4) et/ou du système de navigation.

5. Véhicule automobile selon la revendication 3 ou 4, **caractérisé en ce que** le véhicule automobile (1) comprend une interface de communication, en particulier une interface de communication sans fil, afin de recevoir au moins partiellement, à l'aide de cette interface de communication, les informations relatives à l'environnement du véhicule automobile (1) et de les fournir au dispositif de commande (3), l'interface de communication étant en particulier une interface de communication car-to-car et/ou car-to-X.

6. Véhicule automobile selon l'une des revendications précédentes, **caractérisé en ce que** le dispositif de commande (3) est configuré pour commander le fonctionnement du module d'éclairage (2) de telle sorte que la représentation de l'ensemble de symboles (SY) reste identique au moins jusqu'à l'instant auquel le véhicule automobile (1) passe en dessous de la distance (d) prédéterminée.

7. Véhicule automobile selon l'une des revendications précédentes, **caractérisé en ce que** le dispositif de commande (3) est configuré pour commander le fonctionnement du module d'éclairage (2) de telle sorte que l'étendue de l'ensemble de symboles (SY) dans le sens de marche du véhicule automobile (1) est réduite lorsque le véhicule automobile (1) passe en dessous d'une distance prédéfinie par rapport à l'emplacement (PO) prédéfini, la distance prédéfinie étant inférieure ou égale à la distance (d) prédéterminée.

8. Véhicule automobile selon l'une des revendications précédentes, **caractérisé en ce que** l'ensemble de symboles (SY) comprend une barre d'arrêt (HB), laquelle indique l'emplacement d'arrêt (PO) du véhicule automobile (1) lorsque le véhicule automobile (1) passe en dessous de la distance (d) prédéterminée, la barre d'arrêt (HB) étant de préférence une barre droite qui s'étend perpendiculairement à l'axe longitudinal du véhicule automobile (1) par rapport à sa position à l'emplacement d'arrêt (PO).

9. Véhicule automobile selon la revendication 8, **caractérisé en ce que** l'ensemble de symboles (SY) comprend à côté de la barre d'arrêt (HB) une pluralité d'autres barres (B) situées à une plus petite distance du véhicule automobile (1) que la barre d'arrêt (HB), les autres barres (B) s'étendant de préférence parallèlement à la barre d'arrêt (HB).

10. Véhicule automobile selon la revendication 9 en combinaison avec la revendication 7, **caractérisé en ce que** les autres barres (B) disparaissent tour à tour lorsque le véhicule automobile (1) passe en dessous de la distance prédéfinie par rapport à l'emplacement (PO) prédéfini, les autres barres diminuant de préférence continuellement leurs distances à la barre d'arrêt (HB) et se confondant les unes avec les autres et finalement avec la barre d'arrêt (HB).

11. Véhicule automobile selon l'une des revendications précédentes, **caractérisé en ce que** le module d'éclairage (2) comprend une source de lumière laser à l'aide de la lumière de laquelle la génération de l'ensemble de symboles (SY) sur le sol est provoquée, et/ou le module d'éclairage (2) est un module d'éclairage (2) à balayage, lequel génère l'ensemble de symboles (SY) par un mouvement de balayage d'un point lumineux sur le sol.
